# EUROPÄISCHE PATENTANMELDUNG

(11) **EP 2 428 368 A1**
(43) Veröffentlichungstag der Anmeldung: **14.03.2012**
(21) Anmeldenummer: 11181024.8
(22) Anmeldetag: 13.09.2011
(51) Int. Cl.: B60C 5/22, B60C 11/00, B60C 11/16

(54) **Reifen mit variablem Rollwiderstand, Vorrichtung und Verfahren zur Variation des Rollwiderstands eines Reifens**

(30) Priorität: 13.09.2010 DE 102010045119
(71) Anmelder: REHAU AG + Co, 95111 Rehau (DE)
(72) Erfinder: Lustenberger, Martin, 1752 Villars-sur-Glane (CH)

(57) **Zusammenfassung**

Die vorliegende Erfindung betrifft einen Reifen mit variablem Rollwiderstand für ein Fahrzeug, aufweisend eine Lauffläche (1), und einen die Lauffläche (1) tragende Stützkörper, insbesondere ein mit einem Fluid befüllbaren Stützkörper, wobei in dem Stützkörper eine radial umlaufende Druckkammer (4) vorgesehen ist, so dass bei einer Variation des Drucks des Fluids innerhalb der Druckkammer (4) ein Teilbereich (1a) der Lauffläche in der Umgebung der Druckkammer (4) in alleinige oder außer Wirkung mit der Bodenoberfläche bringbar ist.

## Beschreibung

Die vorliegende Erfindung betrifft einen Reifen mit variablem Rollwiderstand für ein Fahrzeug, aufweisend eine die Reifenlauffläche des Reifens bildende Belagschicht, wobei die Belagschicht für ein in Kontakt kommen mit einer Bodenoberfläche ausgelegt ist, und einen die Belagschicht tragenden Stützkörper, insbesondere einen mit einem Füllfluid befüllbaren Stützkörper.

Ein für den Energieverbrauch eines Fahrzeugs wesentlicher Fahrwiderstand ist der sog. Reifenrollwiderstand. Hierbei zeigt sich jedoch, dass eine Verringerung des Rollwiderstandes nicht unabhängig vom dessen Haftungsniveau (Grip) zu einer Bodenoberfläche erreicht werden kann. Zur Reduzierung des Rollwiderstandes kann zum einen die Reifenaufstandsfläche, dass heißt die Fläche bzw. das Volumen des Reifens bzw. der Belagschicht des Reifens, welche im Kontakt zur Bodenoberfläche steht, verringert werden. Zum anderen können die Materialien der Belagschicht so angepasst werden, dass diese weniger Energieverluste durch die Verformung des Belagschichtmaterials aufweisen. Der Reifenrollwiderstand wird durch die Deformation des eingefederten Reifens beim Abrollen unter der Gewichtslast des Fahrzeugs verursacht. Dabei führt die so genannte Hysterese des für den Reifen verwendeten Materials (in der Regel Gummi, Kautschuk oder Elastomer) dazu, dass ein Teil der Deformationsenergie in Wärme umgewandelt wird. Dieser Energieverlust bestimmt damit den Rollwiderstand des Reifens und ist im Wesentlichen von dem deformierten Volumen (Aufstandsfläche) und dem Material der Belagschicht abhängig. Für ein hohes Haftungsniveau (hohen Grip) ist eine große Hysterese notwendig, da der Reifen bzw. dessen mit der Bodenoberfläche in Kontakt kommende Belagschicht sich bei einem starken Verformungsvermögens der Belagschicht an die Rauhigkeit der Bodenoberfläche anpasst, und die Haftung zwischen Reifen und Oberfläche verbessert. Demgegenüber bedingt das starke Verformungsvermögen der Belagschicht aufgrund der großen Hystereseverluste (Energieverlust durch Wärmeentwicklung) des Materials jedoch einen entsprechend erhöhten Rollwiderstand.

In der DE 100 44 074 A1 ist ein Kraftfahrzeugreifen mit einer variablen Aufstandsfläche bzw. einem variablen Rollwiderstand offenbart, welcher in die Mitte der Karkasse eine eingearbeitete zusätzliche Schwungmasse aufweist, die durch ihr Gewicht dazu veranlasst wird, bei einer bestimmten Drehzahl mittels der entstehenden Fliehkraft die Lauffläche des Reifens so nach außen aufzuwölben, dass auf der Reifenlauffläche eine Wulst entsteht. Infolge dessen verringern sich die Aufstandsfläche des Reifens auf der Bodenoberfläche und desgleichen der Rollwiderstand des Reifens. Nachteilig ist dabei, dass das Aufwölben der Reifenlauffläche allein durch die Rotationsgeschwindigkeit des Reifens, dass heißt durch die Geschwindigkeit des Fahrzeuges erfolgt. Infolge dessen kann der Rollwiderstand des Reifens allein durch die Erhöhung der Fahrzeuggeschwindigkeit verringert werden, so dass bei niedrigen Fahrzeuggeschwindigkeiten der Rollwiderstand nicht signifikant variiert werden kann. Zudem besteht ein großer Nachteil darin, dass in einer Gefahrensituation, bei der eine möglichst große Aufstandsfläche der Reifenlauffläche (hoher Grip) nötig ist, eine notwendige Bremsreibung oder Übertragung von Seiten- und Querbeschleunigungskräften zur Bodenoberfläche gerade nicht kurzfristig zur Verfügung steht, da eine Vergrößerung der Aufstandsfläche allein durch eine Geschwindigkeitsverringerung des Fahrzeugs möglich ist. Der Reifen des Standes der Technik verhindert durch seinen Aufbau somit in einer Gefahrensituation selbst, dass ein rascher Geschwindigkeitsabbau erfolgen kann.

Die DE 10 2006 053 725 A1 beschreibt einen Fahrzeugluftreifen, welcher eine Verbesserung hinsichtlich des voranstehend erläuterten Konflikts zwischen gutem Haftungsniveau (Grip) und geringem Rollwiderstand bewirkt, indem durch eine verbesserte Materialrezeptur die beiden Eigenschaften gleichzeitig auf ein besseres Niveau gebracht werden können. Nachteilig ist hierbei, dass die materialbedingten Verbesserungen nur als vergleichsweise geringfügig zu bezeichnen sind und zudem im späteren Einsatz des Reifens nicht mehr situationsbedingt variiert werden können.

Die Erfindung stellt sich daher die Aufgabe, einen Reifen mit den eingangs beschriebenen Merkmalen anzugeben, der gegenüber dem Stand der Technik eine Variation des Rollwiderstandes ermöglicht, welche unabhängig von der Fahrzeuggeschwindigkeit bzw. der Rotationsgeschwindigkeit des Reifens ist und die Variation des Rollwiderstandes gleichzeitig in einem größeren Bereich zwischen optimierter Haftung des Reifens und einem geringen Rollwiderstand einstellbar ist.

Erfindungsgemäß wird diese Aufgabe dadurch gelöst, dass auf der der Bodenoberfläche abgewandten Seite der Belagschicht mindestens eine radial umlaufende Druckkammer vorgesehen ist, so dass bei einer Variation des Drucks eines Druckfluids innerhalb der Druckkammer mindestens ein Teilbereich der Belagschicht in der Umgebung der Druckkammer in alleinige oder außer Wirkung mit der Bodenoberfläche bringbar ist. Durch das erfindungsgemäße Vorsehen einer radial umlaufenden Druckkammer kann insbesondere durch eine Druckerhöhung innerhalb der Druckkammer ein Teilbereich der Belagschicht, welcher sich in der Umgebung der Druckkammer befindet, in alleinige Wirkung mit der Bodenoberfläche gebracht werden. Die Variation bzw. die Erhöhung des Drucks erfolgt über eine Erhöhung des Druckfluiddrucks innerhalb der Druckkammer, wobei als Druckfluid insbesondere Gase (z.B. Luft oder Stickstoff) oder Flüssigkeiten (Wasser oder Öle) in Frage kommen. Durch das in alleinige Wirkung mit der Oberfläche Bringen eines Teilbereichs der Belagschicht reduziert sich die Aufstandsfläche der Belagschicht, so dass infolge dessen weniger Energie durch entstehende Verlustwärme (Hystereseverluste) verloren geht und der Rollwiderstand verringert ist. Alternativ kann durch eine Verringerung des Drucks des Druckfluids innerhalb der Druckkammer ein Teilbereich der Belagschicht in der Umgebung der Druckkammer außer Wirkung mit der Oberfläche gebracht werden. Somit ist erreicht, dass die angrenzenden Abschnitte der Belagschicht in alleinige Wirkung mit der Oberflächen gebracht werden, so dass sich das Gesamtvolumen der Belagschicht, welches durch das Umlaufen des Reifens kontinuierlich verformt wird, ebenfalls reduziert, was wie vorstehend erläutert ebenso zu einer Reduzierung des Rollwiderstandes führt. Der Teilbereich der Belagschicht kann gegenüber den angrenzenden Abschnitten der Belagschicht hervorstehend expandierbar oder gegenüber den angrenzenden Abschnitten zurückstehend kontrahierbar sein.

Der Stützkörper kann insbesondere ein mit einem Füllfluid befüllbarer Stützkörper sein (Luftreifen), kann jedoch auch ohne einen Hohlraum ausgebildet sein. Stützkörper ohne einen mit einem Füllfluid füllbaren Hohlraum sind beispielhaft Reifen, die keine Luftreifen sind wie z.B. ein "Tweel^{©}" der Fa. Michelin oder andere so genannte "Non-Pneumatic Tires" (NPTs). Die DE 601 31 469 T2 offenbart beispielhaft einen derartigen nicht-pneumatischen Reifen.

Die Druckkammer kann innerhalb einer Wandung des Stützkörpers ausgebildet sein. Innerhalb der Wandung können Verstärkungs- oder Armierungslagen vorgesehen sein. Die wenigstens eine Verstärkungs- oder Armierungslage kann unterhalb und/oder oberhalb der Druckkammer innerhalb der Wandung des Stützkörpers vorgesehen sein. Bevorzugt ist wenigstens eine Verstärkungs- oder Armierungslage oberhalb der Druckkammer, d.h. zwischen der Belagschicht und der Druckkammer vorgesehen. Ferner kann innerhalb der Belagschicht selbst wenigstens eine Verstärkungs- oder Armierungslage vorgesehen sein. Die Verstärkungs- oder Armierungslage kann durch Gewebeschichten und/oder Faserlagen, die in die Wandung oder die Belagschicht eingebettet sind, gebildet sein. Das Gewebe und/oder die Fasern können aus Kunstfasern (z.B. Viskose oder Nylon), oder aus Pflanzenfasern (z.B. Baumwolle), oder aus Metallfasern (z.B. Stahlfasern) oder aus Kombinationen der vorgenannten Fasern bestehen. Als Maß für die Dichte einer Gewebeschicht wird die Einheit TPI (Threads per Inch) verwendet. Diese gibt an, aus wie vielen Fasern pro Zoll die Gewebeschicht besteht.

Das Elastizitätsverhalten der Wandung im Bereich der Druckkammer kann sich von dem Elastizitätsverhalten der Wandung in den übrigen Bereichen unterscheiden. Das Elastizitätsverhalten der Wandung im Bereich der Druckkammer kann insbesondere größer sein als das Elastizitätsverhalten der Wandung in den übrigen Bereichen des Reifens. Das unterschiedliche Elastizitätsverhalten der Bereiche kann durch eine Variation des für die unterschiedlichen Bereiche eingesetzten Materials oder durch eine Unterbrechung bzw. einen differierende Aufbau einer Verstärkungslage oder einer Armierungslage des Reifens realisiert sein. Ein differierender Aufbau kann beispielsweise eine unterschiedliche Dichte (z.B. abweichender TPI-Wert) oder ein unterschiedliches Material der im Bereich der Druckkammer angeordneten Verstärkungs- oder Armierungslage sein.

Die Druckkammer kann innerhalb eines separaten, insbesondere vom Stützkörper unabhängigen, Druckschlauchs ausgebildet sein, wobei der Teilbereich der Belagschicht durch einen Teil oder ein Segment der Wandung des Druckschlauches gebildet ist. Der Druckschlauch kann somit einen mehrteiligen Aufbau aufweisen. Durch das erfindungsgemäße Vorsehen eines separaten Druckschlauches ergibt sich in vorteilhafter Weise eine Erhöhung der Laufleistung des erfindungsgemäßen Reifens, da bei einem Verschleiß des Teilbereichs der Belagschicht ein einfacher Austausch des Druckschlauches erfolgen kann. Insbesondere in Kombination mit einem vorgenannten nicht-pneumatischen Stützkörper ergeben sich große Vorteile bezüglich der Lebensdauer des erfindungsgemäßen Reifens.

Der Teilbereich der Belagschicht kann aus einem Material gebildet sein, das im Vergleich zu dem Material der daran angrenzenden Abschnitte der Belagschicht geringere Hystereseverluste und/oder einen geringeren Verlustfaktor tan δ bei Temperaturen im Temperaturbereich von 20°C bis 90°C aufweist. Insbesondere kann der Teilbereich der Belagschicht aus einem Material gebildet sein, das im Vergleich zu dem Material der angrenzenden Abschnitte der Belagschicht geringere Hystereseverluste und/oder einen geringeren Verlustfaktor tan δ bei einer Temperatur im Temperaturbereich von 40°C bis 80°C, vorzugsweise bei einer Temperatur von 60°C aufweist. Unter Hystereseverlust versteht man den Energieverlust, der bei einer dynamischen Beanspruchung des Materials der Belagschicht - Verwendung finden hier insbesondere Kautschuke, Elastomere oder Gummis - irreversibel in Wärme umgewandelt wird. Als Messgröße für Hystereseverluste dient der so genannte Verlustfaktor tan δ, der als das Verhältnis von Verlustmodul E" zu Speichermodul E' definiert ist (vgl. hierzu auch DIN 53 513 und DIN 53 535). Der Verlustfaktor tan δ wird gemäß DIN 53 513 aus Messungen mit konstanter Verformungsamplitude von 0,2% bei 10% Vorverformung in Kompression mit 10 Hz dynamischer Verformungsfrequenz bei Temperaturen im Temperaturbereich von 20°C bis 90°C, insbesondere bei 60°C bestimmt. Eine Erniedrigung des tan δ im anwendungstechnisch wichtigen Temperatur- / Frequenz- bzw. Amplituden-Bereich führt zu einem verminderten Hitzeaufbau in dem verwendeten Material. Reifen aus z.B. Kautschuk, Elastomeren oder Gummi, die einen verminderten Hystereseverlust aufweisen, zeichnen sich durch einen verminderten Rollwiderstand und infolge dessen durch einen geringeren Energieverbrauch der damit ausgestatteten Fahrzeuge aus. Der dynamische Verlustmodul E" weist als Einheit N/mm² auf. Erzielt werden können die Verringerung der Hystereseverluste und/oder die Verringerung des Verlustfaktors tan δ des Materials der Belagschicht, bei Temperaturen im Temperaturbereich von 20°C bis 90°C, beispielsweise durch eine Erhöhung des sog. Silikat-Anteils innerhalb der Materialzusammensetzung der Belagschicht, insbesondere des Teilbereichs der Belagschicht. Prinzipiell ist die Charakterisierung des Verlustfaktors tan δ gegen die Temperatur eines Kautschuks, Elastomeren oder Gummis für den Fachmann auf diesem Gebiet wohl bekannt. Generell kann gesagt werden, dass die Nassgriffigkeit des Reifens umso besser ist, je höher der bei 0°C gemessene tan δ-Wert ist. Andererseits ist der Rollwiderstand umso geringer, je niedriger insbesondere der bei einer Temperatur zwischen 60°C bis 70°C gemessene tan δ-Wert ist.

Es kann mindestens eine Verbindungsleitung zur Verbindung der Druckkammer mit mindestens einem Fluidspeicher und/oder einer Fluidquelle vorgesehen sein. Der Fluidspeicher kann ein Druckspeicher oder ein Vakuumspeicher sein. Als Fluidquelle können Pumpen, insbesondere Hochleistungspumpen und Vakuumpumpen eingesetzt werden. Die Verbindungsleitung kann innerhalb eines Hohlraums des Stützkörpers (welcher beispielsweise das Füllfluid des Stützkörpers aufnimmt) oder innerhalb und/oder auf einer Wandung des Stützkörpers geführt sein. Ist der Stützkörper als nicht-pneumatischer Reifen ausgebildet, wird die Verbindungsleitung vorzugsweise innerhalb des Stützkörpers geführt.

Vorzugsweise sind mindestens zwei Verbindungsleitungen vorgesehen, die so zueinander angeordnet sind, dass die durch die Verbindungsleitungen entstehenden zusätzlichen lokalen Massen bzw. die durch die Verbindungsleitungen lokal reduzierten Massen sich so gegeneinander aufheben, dass es zu keiner Rotationsunwucht des Reifens kommt. Bei vorsehen nur einer Verbindungsleitungen kann eine Rotationsunwucht z.B. durch ergänzen einer zusätzlichen Schwungmasse kompensiert werden.

Innerhalb der Druckkammer kann ein Innendruck-Sensorelement angeordnet sein. Alternativ kann die Druckkammer eine druckleitende Verbindung zu einem Innendruck-Sensorelement aufweisen. Das Innendruck-Sensorelement liefert für eine Steuer- und/oder Sensor-und/oder Regeleinheit Information auf welchem Druckniveau sich das Druckfluid innerhalb der Druckkammer befindet.

Weiterhin Teil der Erfindung ist eine Vorrichtung zur Variation des Rollwiderstandes eines Reifens, aufweisend einen erfindungsgemäßen Reifen, insbesondere nach einem der Ansprüche 1 bis 6, und einem ersten Fluidspeicher und einem zweiten Fluidspeicher, wobei zur Verbindung der Druckkammer mit den beiden Fluidspeichern mindestens eine Verbindungsleitung und Schaltelemente (insbesondere Ventile) vorgesehen sind, die vorzugsweise eine wechselseitige fluidleitende Verbindung zwischen der Druckkammer und den Fluidspeichern ermöglichen. Der erste Fluidspeicher kann dafür vorgesehen sein, einen höheren Fluiddruck bereitzustellen als der zweite Fluidspeicher. Der zweite Fluidspeicher kann insbesondere dafür vorgesehen sein, ein Vakuum bereitzustellen. Durch das erfindungsgemäße Vorsehen einer Vorrichtung zur Variation des Reifenrollwiderstandes mit einem ersten Fluidspeicher und mit einem zweiten Fluidspeicher wird ermöglicht, dass ein Fluidspeicher mit einem hohen Druckfluiddruck vorgesehen sein kann, welcher eine kurzfristige Füllung der Druckkammer mit dem Druckfluid ermöglicht, so dass der Teilbereich der Belagschicht in der Umgebung der Druckkammer in einem sehr kurzen Zeitintervall in alleinige Wirkung mit der Bodenoberfläche bringbar ist. Demgegenüber kann es vorteilhaft sein, dass möglichst kurzfristig / schlagartig der Druck des Fluids innerhalb der Druckkammer reduziert wird, um insbesondere in einer Gefahrensituation sehr schnell zu einer maximale Haftung des Reifens auf der Bodenoberfläche zurückzukehren. Hierzu kann ein zweiter Fluidspeicher, welcher ein Vakuum gegenüber der Atmosphäre bereitstellt, vorgesehen sein. Durch das Vorsehen eines Vakuums innerhalb des zweiten Fluidspeichers verkürzt sich die benötigte Zeit für eine Druckerniedrigung innerhalb der Druckkammer gegenüber einem einfachen Entlüften der Druckkammer gegenüber der Atmosphäre. Vorzugsweise werden die zwei Fluidspeicher über eine gemeinsame Pumpe auf einen hohen Druck bzw. auf einen Unterdruck gebracht.

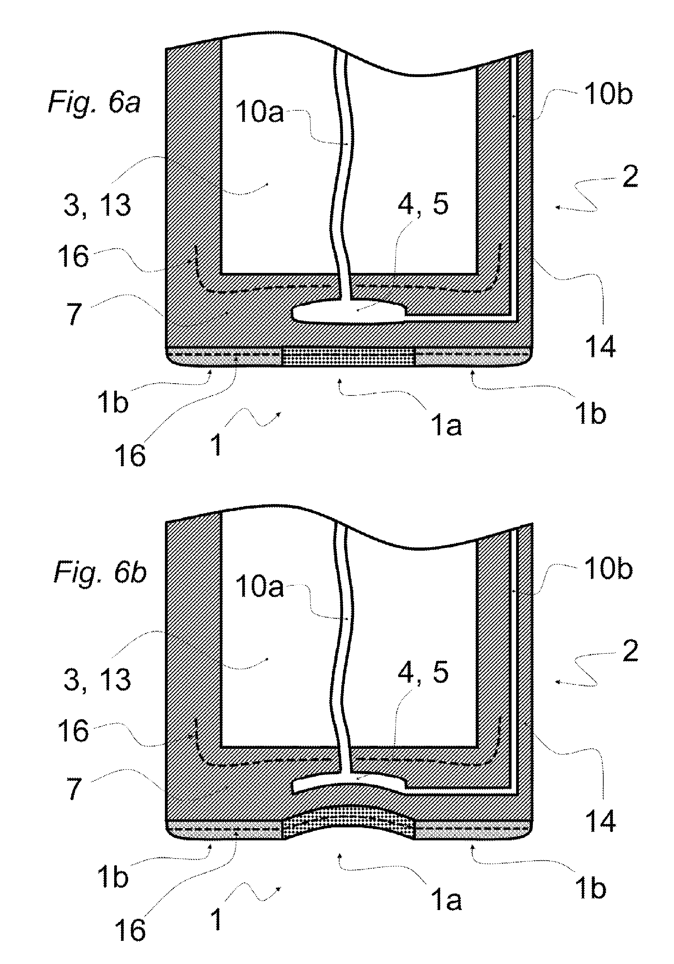

Der erfindungsgemäße Reifen und/oder die erfindungsgemäße Vorrichtung kann ein Entlastungsventil aufweisen, das so ausgebildet ist, dass das Entlastungsventil sich bei einem Ausfall oder bei einer Störung der Vorrichtung, vorzugsweise automatisch, öffnet. In Folge dessen stellt sich innerhalb der Druckkammer des erfindungsgemäßen Reifens automatisch ein Druckwert ein, welcher einer maximalen Aufstandsfläche des Reifens entspricht (vgl. diesbezüglich beispielhaft Fig. 6a). Somit wird in den vorgenannten Störfällen immer eine maximale Haftung des Reifens auf der Bodenoberfläche gewährleistet, selbst wenn Teile der Vorrichtung gestört werden oder ausfallen.

Ferner Teil der Erfindung ist ein Verfahren zur Variation des Rollwiderstandes, mit einem Reifen, aufweisend eine die Reifenlauffläche des Reifens bildende Belagschicht, wobei die Belagschicht für ein in Kontakt kommen mit einer Bodenoberfläche ausgelegt ist, einen die Belagschicht tragenden Stützkörper, insbesondere einen mit einem Füllfluid befüllbaren Stützkörper, wobei auf der der Bodenoberfläche abgewandten Seite der Belagschicht mindestens eine radial umlaufende Druckkammer vorgesehen ist, wobei von einer Steuer-und/oder Sensoreinheit eines mit dem Reifen versehenen Fahrzeuges in Abhängigkeit zu einem ermittelten Fahrzustandsparameter durch eine Variation des Drucks eines Druckfluids innerhalb der Druckkammer ein Teilbereich dieser Belagschicht in der Umgebung der Druckkammer in alleinige oder außer Wirkung mit der Bodenoberfläche gebracht wird.

Ein weiteres Verfahren zur Variation des Rollwiderstandes umfasst einen Reifen, aufweisend eine die Reifenlauffläche des Reifens bildende Belagschicht, wobei die Belagschicht für ein mit einer Bodenoberfläche ausgelegt ist, ein die Belagschicht tragenden Stützkörper, insbesondere ein mit einem Füllfluid befüllbaren Stützkörper, wobei auf der der Bodenoberfläche abgewandten Seite der Belagschicht mindestens eine radial umlaufende Druckkammer vorgesehen ist, wobei von einer Steuer- und/oder Sensoreinheit eines mit dem Reifen versehenen Fahrzeuges in Abhängigkeit zu einem ermittelten Fahrzustandsparameter durch eine Variation des Drucks eines Druckfluids innerhalb der Druckkammer ein Teilbereich dieser Belagschicht in der Umgebung der Druckkammer und die daran angrenzenden Abschnitte der Belagschicht in gemeinsame Wirkung mit der Bodenoberfläche gebracht werden. Dies entspricht einer maximalen Aufstandsfläche des Reifens bzw. der Belagschicht des Reifens.

Als Fahrzustandsparameter in dessen Abhängigkeit durch eine Variation des Drucks eines Druckfluids innerhalb der Druckkammer ein Teilbereich dieser Belagschicht in der Umgebung der Druckkammer in alleiniger oder außer Wirkung mit den Bodenoberfläche gebracht wird, werden insbesondere eine im Wesentlichen Geradeausfahrt des Fahrzeugs erfassende Fahrzustandsparameter verstanden. Dies können insbesondere unterhalb eines definierten Grenzwertes liegende Sensorwerte für die Quer- und/oder Längsbeschleunigung oder Sensorwerte für das aktuell vorliegende Haftungsvermögen der Bodenoberfläche (z.B. Schnee, Regen, Eis, Trocken, Sandig) sein.

Als Fahrzustandsparameter in dessen Abhängigkeit durch eine Variation des Drucks eines Druckfluids innerhalb der Druckkammer ein Teilbereich dieser Belagschicht in der Umgebung der Druckkammer und die daran angrenzenden Abschnitte der Belagschicht in gemeinsame Wirkung mit der Bodenoberfläche gebracht werden, werden insbesondere eine enge Kurvenfahrt und/oder eine Bremsung des Fahrzeuges und/oder ein Systemausfall und/oder eine verstärkte Dämpferaktivität und/oder jedwede eine Gefahrensituation erfassende Fahrzustandsparameter verstanden.

Die Steuer- und/oder Sensoreinheit kann Schwingungssensoren, Lenkwinkelsensoren, Traktionssensoren, Geschwindigkeitssensoren, Beschleunigungssensoren, Querbeschleunigungssensoren, Abstandsmesssensoren, Unfallvorwarnsensoren (Pre-Crash-Sensoren), Radarsensoren, Federungssensoren, Regensensoren, ABS-Sensoren, ASR-Sensoren, ESP-Sensoren, MSR-Sensoren, Kamerasensoren, Neigungssensoren oder Kombinationen der vorgenannten Sensoren aufweisen. Die verwendeten Abkürzungen stehen für: ABS (Antiblockiersystem), ASR (Antriebsschlupfregelung), ESP (elektronisches Stabilitätsprogramm) und MSR (Motorschleppmomentenregelung).

Die beiden vorgenannten Verfahren ermöglichen in einfacher Weise mittels allgemein bekannter Steuer- und/oder Sensoreinheiten des Fahrzeuges, die Aufstandsfläche eines erfindungsgemäßen Reifens an die aktuell vorliegende Fahrsituation des Fahrzeuges anzupassen. Beispielhaft kann bei einer im Wesentlich Geradeausfahrt auf einer Schnellfahrstraße (z.B. Autobahn) der Rollwiderstand des Reifens verringert werden, wobei die Steuer und/oder Sensoreinheit gleichzeitig durch eine erneute Druckvariation auf eine veränderte Fahrzustandsparameter oder Gefahrensituation wie beispielsweise eine Bremsung des Fahrzeugs, hohe Quer- oder Seitenbeschleunigungskräfte oder einen Systemausfall oder das Einleiten einer Kurvenfahrt reagiert und die Aufstandsfläche der Belagsschicht maximiert, d.h. den Teilbereich und die daran angrenzenden Abschnitte der Belagsschicht in gemeinsame Wirkung mit der Bodenoberfläche gebracht werden.

### Figurenbeschreibung

Im Folgenden wird die Erfindung anhand lediglich Ausführungsbeispiele darstellender Zeichnungen erläutert. Es zeigen schematisch:
- Fig. 1: Schnittdarstellungen durch erfindungsgemäße Reifen,
- Fig. 2: eine weitere Schnittdarstellung durch einen erfindungsgemäßen Reifen mit einer Mehrkomponenten-Wandung,
- Fig. 3: eine Schnittdarstellung durch einen erfindungsgemäßen Reifen mit einem separaten Druckschlauch,
- Fig. 4: eine Schnittdarstellung durch einen erfindungsgemäßen Reifen mit einem nicht-pneumatischen Stützkörper,
- Fig. 5: eine Schnittdarstellung durch einen erfindungsgemäßen Reifen mit mehreren Verstärkungs- bzw. Armierungslagen,
- Fig. 6: Schnittdarstellungen durch erfindungsgemäße Reifen mit variierenden Füllzuständen der Druckkammer,
- Fig. 7: Schematische Darstellung einer Vorrichtung zur Variation des Reifenrollwiderstands,

- Fig. 8: eine weitere schematische Darstellung einer Vorrichtung zur Variation des Reifenrollwiderstands.

In den Figuren werden gleiche oder funktionsgleiche Elemente mit den gleichen Bezugszeichen versehen.

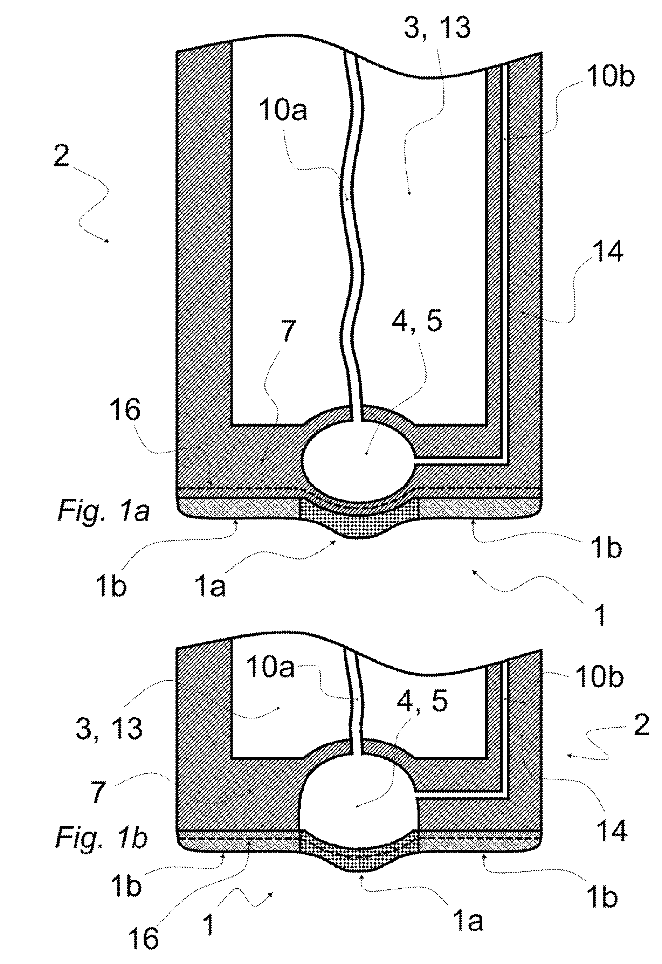

Die Figur 1a und die Figur 1b zeigen jeweils eine schematische Schnittdarstellung durch eine Hälfte eines erfindungsgemäßen Reifens mit einem variablen Rollwiderstand für ein Fahrzeug, aufweisend eine die Reifenlauffläche des Reifens bildende Belagschicht 1, wobei die Belagschicht 1 für ein in Kontakt kommen mit einer Bodenoberfläche ausgelegt ist. Der Reifen weist ferner einen die Belagschicht 1 tragenden Stützkörper 2 auf. Der Reifen ist in diesem Ausführungsbeispiel durch einen mit einem Füllfluid 3 befüllbaren Stützkörper 2 gebildet, welcher einen schlauchlosen Luftreifen darstellt. Auf der der Bodenoberfläche abgewandten Seite der Belagschicht 1 ist eine radial umlaufende Druckkammer 4 vorgesehen, so dass bei einer Variation des Drucks eines Druckfluids 5 innerhalb der Druckkammer 4 ein Teilbereich 1a der Belagschicht 1 in der Umgebung der Druckkammer 4 in alleinige oder außer Wirkung mit der Bodenoberfläche bringbar ist. Durch eine Erhöhung des Drucks des Druckfluids 5 innerhalb der Druckkammer 4 ist der Teilbereich 1a der Belagschicht 1 gegenüber den angrenzenden Abschnitten 1 b der Belagschicht 1 hervorstehend expandierbar. Durch eine Verringerung des Drucks des Druckfluids 5 innerhalb der Druckkammer 4 ist der Teilbereich 1a der Belagschicht 1 in der Umgebung der Druckkammer 4 außer Wirkung mit der Bodenoberfläche bringbar. Für diesen in Figur 6b dargestellten Fall ist der Teilbereich 1a gegenüber den angrenzenden Abschnitten 1 b zurückstehend kontrahierbar. Die in den Ausführungsbeispielen in Figur 1 a und in Figur 1b dargestellte Druckkammer 4 befindet sich innerhalb einer Wandung 7 des Stützkörpers 2 bzw. ist die Druckkammer 4 innerhalb einer Wandung 7 des Stützkörpers 2 ausgebildet. Der Teilbereich 1 a der Belagschicht 1 ist aus einem Material gebildet, das im Vergleich zu dem Material der angrenzenden Abschnitte 1 b der Belagschicht 1 geringere Hystereseverluste bzw. einen geringeren Verlustfaktor tan δ bei Temperaturen im Temperaturbereich von 20 °C bis 90°C, insbesondere bei 60 °C aufweist. Eine erste Verbindungsleitung 10a dient zur Verbindung der Druckkammer 4 mit einem Fluidspeicher bzw. einer Fluidquelle (beide nicht näher dargestellt) und ist innerhalb eines Hohlraums 13 des Stützkörpers 2 geführt. Eine weitere Verbindungsleitung 10b zur Verbindung der Druckkammer 4 mit einem zweiten Fluidspeicher bzw. einer Fluidquelle (beide nicht näher dargestellt) ist innerhalb der Wandung 7, 14 des Stützkörpers 2 geführt. Da es sich bei den Figuren 1a und 1b um Schnittdarstellungen handelt versteht es sich von selbst, dass die Verbindungsleitungen 10a und 10b nur örtlich begrenzte Ausnehmungen innerhalb der Wandungen 7 und 14 bilden. Der in Figur 1a dargestellte Reifen weist eine Verstärkungs- bzw. Armierungslage 16 auf, welche innerhalb der Wandung 7 zwischen der Belagschicht 1 und der Druckkammer 4, oberhalb der Druckkammer 4 angeordnet ist. Demgegenüber zeigt das Ausführungsbeispiel in Figur1b, dass die Druckkammer 4 alternativ von einem Teil der Wandung 7 des Stützkörpers 2 und der der Bodenoberfläche abgewandten Seite der Belagschicht 1 direkt begrenzt und eingefasst ist. Der in Figur 1b dargestellte Reifen weist zudem eine Verstärkungs- oder Armierungslage 16 auf, welche innerhalb der Belagschicht 1 angeordnet ist.

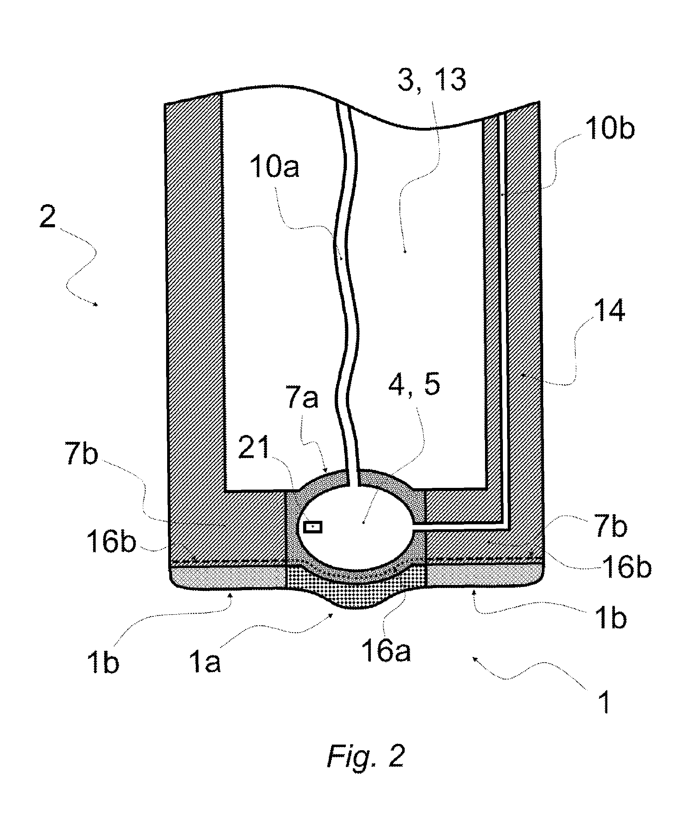

Die Figur 2 zeigt eine schematische Schnittdarstellung durch einen erfindungsgemäßen Reifen. Gegenüber den in Figur 1 dargestellten Ausführungsformen der Erfindung weist die Wandung 7 des Reifens einen Mehrkomponenten-Aufbau auf. Die Wandung ist im Bereich 7a der Druckkammer 4 aus einem elastischeren Material gebildet als die übrigen Bereiche 7b der Wandung des Reifens. Das Elastizitätsverhalten der Wandung im Bereich 7a der Druckkammer 4 unterscheidet sich von dem Elastizitätsverhalten der Wandung in den übrigen Bereichen 7b und ist insbesondere größer. Ferner ist eine Verstärkungs- bzw. Armierungslage 16 vorgesehen, wobei die Verstärkungs- bzw. Armierungslage 16 im Bereich 16a der Druckkammer 4 so ausgebildet ist, dass sich das Elastizitätsverhalten im Teilbereich 1 a der Belagschicht 1 von dem Elastizitätsverhalten der angrenzenden Abschnitte 1 b der Belagschicht 1 aufgrund different aufgebauter Verstärkungs- bzw. Armierungslagen 16a und 16b unterscheidet. Analog zu Fig. 1 können diese different aufgebauten Verstärkungs- bzw. Armierungslagen 16a, 16b auch innerhalb der Belagschicht 1 vorgesehen sein. Innerhalb der Druckkammer 4 ist ein Innendruck-Sensorelement 21 angeordnet. Das Innendruck-Sensorelement 21 übermittelt mittels einer drahtlosen Verbindung den Druckwert des Druckfluids 5 innerhalb der Druckkammer 4 an eine Steuer- und/oder Regel- und/oder Sensoreinheit.

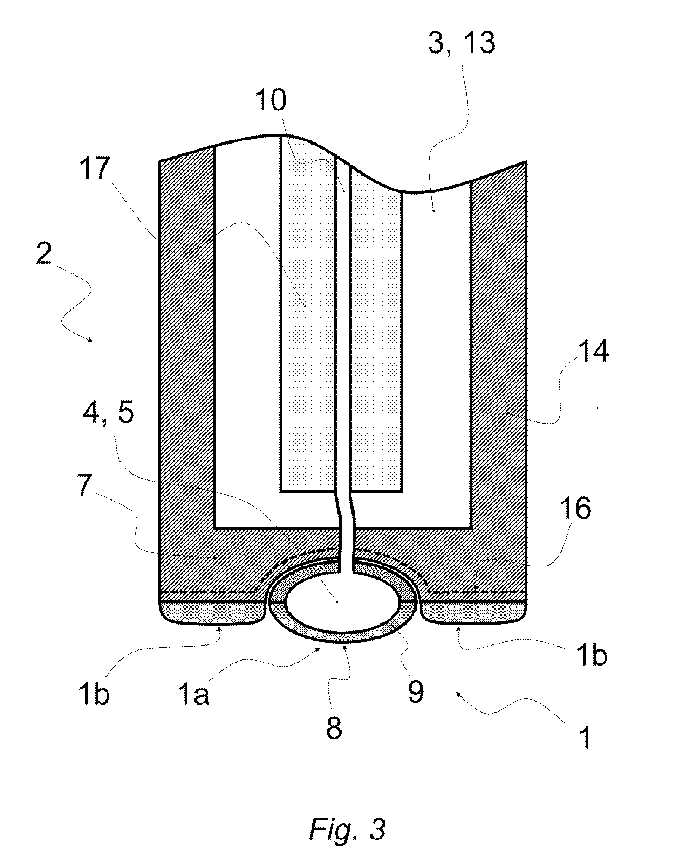

Die Fig. 3 zeigt eine schematische Schnittdarstellung durch einen erfindungsgemäßen Reifen, aufweisend eine die Reifenlauffläche des Reifens bildende Belagschicht 1, wobei die Belagschicht 1 für ein in Kontakt kommen mit einer Bodenoberfläche ausgelegt ist, und einen die Belagschicht 1 tragenden Stützkörper 2, insbesondere einen mit einem Füllfluid 3 befüllbaren Stützkörper 2. Auf der der Bodenoberfläche abgewandten Seite der Belagschicht 1 ist eine radial umlaufende Druckkammer 4 vorgesehen, so dass bei einer Variation des Drucks eines Druckfluids 5 innerhalb der Druckkammer 4 ein Teilbereich 1a der Belagschicht 1 in der Umgebung der Druckkammer 4 in alleinige oder außer Wirkung mit der Bodenoberfläche bringbar ist. Die Druckkammer 4 ist innerhalb eines separaten (vom Stützkörper 2 unabhängigen) Druckschlauchs 8 ausgebildet. Der Teilbereich 1 a der Belagschicht 1 ist durch einen Teil der Wandung 9 des Druckschlauches 8 gebildet. Alternativ kann der Teilbereich 1 a der Belagschicht 1 durch ein Segment (z.B. eine Außenschicht) der Wandung 9 des Druckschlauches 8 gebildet sein. Der Druckschlauch 8 weist einen Aufbau aus zwei unterschiedlichen Materialien auf. Eine Verbindungsleitung 10 zur Verbindung der Druckkammer 4 mit einem Fluidspeicher 11, 12 und/oder einer Fluidquelle 15 (beides hier nicht näher dargestellt) ist innerhalb eines Hohlraumes 13 des Stützkörpers 2 geführt. Die Verbindungsleitung 10 ist darüber hinaus innerhalb eines sog. Run-Flat-Elements 17 geführt, welches sich ebenfalls innerhalb des Hohlraumes 13 des Stützkörpers 2 befindet. In dem gezeigten Ausführungsbeispiel in Figur 3 ist die Belagschicht 1 aus einem einheitlichen Material gebildet. Alternativ kann der Teilbereich 1a der Belagschicht 1 aus einem Material gebildet sein, das im Vergleich zu dem Material der angrenzenden Abschnitte 1 b der Belagschicht 1 geringere Hystereseverluste bzw. einen geringen Verlustfaktor tan δ bei Temperaturen im Temperaturbereich von 20 °C bis 90 °C, insbesondere bei 60°C aufweist. Der Reifen weist ferner eine Verstärkungs- bzw. Armierungslage 16 auf, welche innerhalb der Wandung 7 des Stützkörpers 2 angeordnet ist.

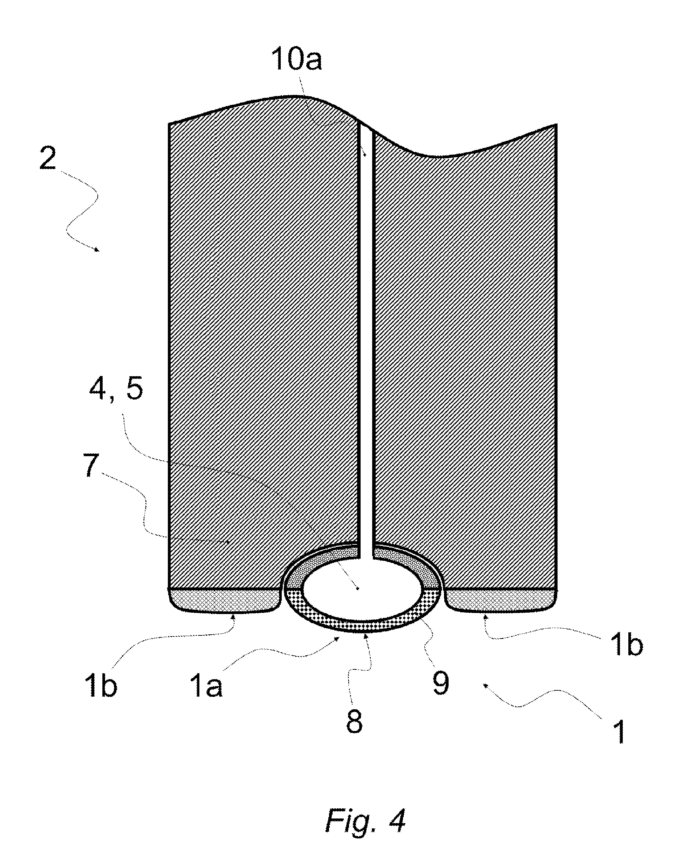

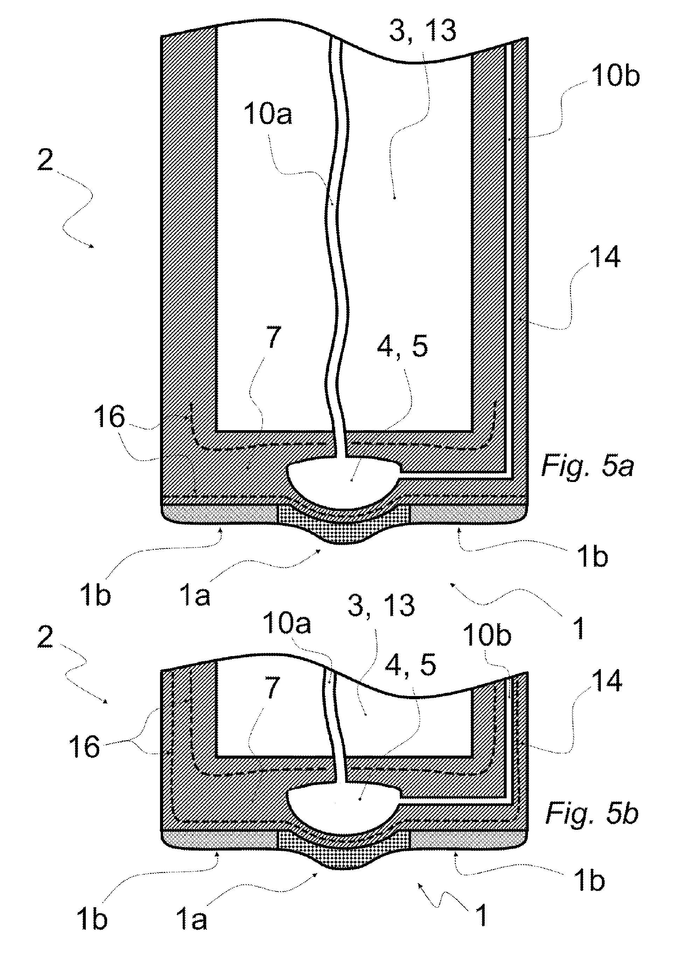

Die Figur 4 zeigt eine schematische Schnittdarstellung durch einen erfindungsgemäßen Reifen, aufweisend eine die Reifenlauffläche des Reifens bildende Belagschicht 1, wobei die Belagschicht 1 für ein in Kontakt kommen mit einer Bodenoberfläche ausgelegt ist, und einen die Belagschicht 1 tragenden Stützkörper 2. Auf der der Bodenoberfläche abgewandten Seite der Belagschicht 1 ist eine radial umlaufende Druckkammer 4 vorgesehen, so dass bei einer Variation des Drucks eines Druckfluids 5 innerhalb der Druckkammer 4 ein Teilbereich 1 a der Belagschicht 1 in der Umgebung der Druckkammer 4 in alleinige oder außer Wirkung mit der Bodenoberfläche bringbar ist. Der Stützkörper 2 weist im Vergleich zu den weiteren gezeigten Ausführungsformen der Erfindung keinen mit einem Füllfluid füllbaren Hohlraum auf, sondern ist durch einen so genannten Non-Pneumatic-Tire (also einen nicht-pneumatischen Reifen) gebildet. Der Teilbereich 1a der Belagschicht 1 ist aus einem Material gebildet, das im Vergleich zu dem Material der angrenzenden Abschnitte 1 b der Belagschicht 1 geringere Hystereseverluste bzw. einen geringen Verlustfaktor tan δ bei Temperaturen im Temperaturbereich von 20°C bis 90°C, insbesondere bei 60°C aufweist. Die Figuren 5a und 5b zeigen den bereits in Fig. 1a beschriebenen Aufbau eines erfindungsgemäßen Reifens. Der Reifen weist eine die Reifenlauffläche des Reifens bildende Belagschicht 1 auf, wobei die Belagschicht 1 für ein in Kontakt kommen mit einer Bodenoberfläche ausgelegt ist. Der Reifen weist ferner einen die Belagschicht 1 tragenden und mit einem Füllfluid 3 befüllbaren Stützkörper 2 auf. Auf der der Bodenoberfläche abgewandten Seite der Belagschicht 1 ist eine radial umlaufende Druckkammer 4 vorgesehen, so dass bei einer Variation des Drucks eines Druckfluids 5 innerhalb der Druckkammer 4 ein Teilbereich 1 a der Belagschicht 1 in der Umgebung der Druckkammer 4 in alleinige oder außer Wirkung mit der Bodenoberfläche bringbar ist. Zwischen einem das Füllfluid 3 aufnehmenden Hohlraum 13 des Stützkörpers 2 und der Druckkammer 4 befindet sich innerhalb der Wandung 7 des Stützkörpers 2 eine Verstärkungs- bzw. Armierungslage 16, die so ausgebildet ist, dass bei einer Variation des Drucks, insbesondere bei einer Druckerhöhung des Druckfluids 5 innerhalb der Druckkammer 4 die Expansion bzw. Ausdehnung der Druckkammer 4 zumindest im Wesentlichen nur in Richtung weg von dem Hohlraum 13 des Stützkörpers 2 erfolgt. Die Armierungs- bzw. Verstärkungslage 16 weist zur Durchführung einer Verbindungsleitung 10 eine lokale Unterbrechung auf. Der Reifen weist eine zweite Verstärkungs- bzw. Armierungslage 16 auf, welche innerhalb der Wandung 7 zwischen der Belagschicht 1 und der Druckkammer 4 oberhalb der Druckkammer 4 angeordnet ist. In Figur 5b ist als Alternative zu dem in Figur 5a gezeigten Aufbau des erfindungsgemäßen Reifens diese zweite Armierungs- bzw. Verstärkungslage 16 in der Wandung 14 weiter nach oben geführt. Die Verstärkungs- bzw. Armierungslagen 16 können in allen denkbaren oder gezeigten Ausführungsbeispielen im Wesentlichen die gesamte Wandung 14 hinaufreichen.

Die Figuren 6a und 6b zeigen den bereits in Fig. 5a beschriebenen Aufbau eines erfindungsgemäßen Reifens. Selbstredend gelten nachfolgende Ausführungen auch für einen in Fig. 5b gezeigten Reifen. Die Fig. 6a zeigt den Zustand des Reifens für ein Druckniveau mit einer maximalen Aufstandsfläche, das heißt, dass der Teilbereich 1a und die daran angrenzenden Abschnitte 1b der Belagschicht 1 im Kontakt zur Bodenoberfläche stehen. Das so eingestellte Druckniveau des Druckfluids 5 entspricht damit einer maximalen Haftung des Reifens bzw. der Belagschicht 1 auf der Bodenoberfläche. Demgegenüber zeigt Fig. 6b, dass durch die Variation des Drucks des Druckfluids 23 innerhalb der Druckkammer 4 durch eine Druckverringerung bzw. durch einen Unterdruck der Teilbereich 1 a der Belagschicht 1 in der Umgebung der Druckkammer 4 außer Wirkung mit der Oberfläche gebracht ist. Der Unterdruck kann durch eine Saugpumpe oder einen Fluidspeicher mit einem Unterdruck (geringerer Druck als die umgebende Atmosphäre) bereitgestellt werden. Infolge dessen verringert sich ebenfalls der Rollwiderstand des erfindungsgemäßen Reifens, aufgrund dessen, dass die im Kontakt zur Bodenoberfläche stehende Aufstandsfläche der Belagschicht 1 verringert ist und somit im Einsatz des Reifens weniger Material der Belagschicht 1 rollverformt wird. Durch diese verringerte Verformung werden die Energieverluste in Form von Wärmeentwicklung verringert. Vorteilhafterweise bewirkt das Einstellen eines Unterdrucks in der Druckkammer 4 gegenüber der Atmosphäre zudem, dass ein Wassertransportkanal gebildet wird, welcher die Gefahr von Aquaplaning, das heißt das Aufschwimmen des Reifens auf einem Wasserfilm, vorteilhaft verringern kann.

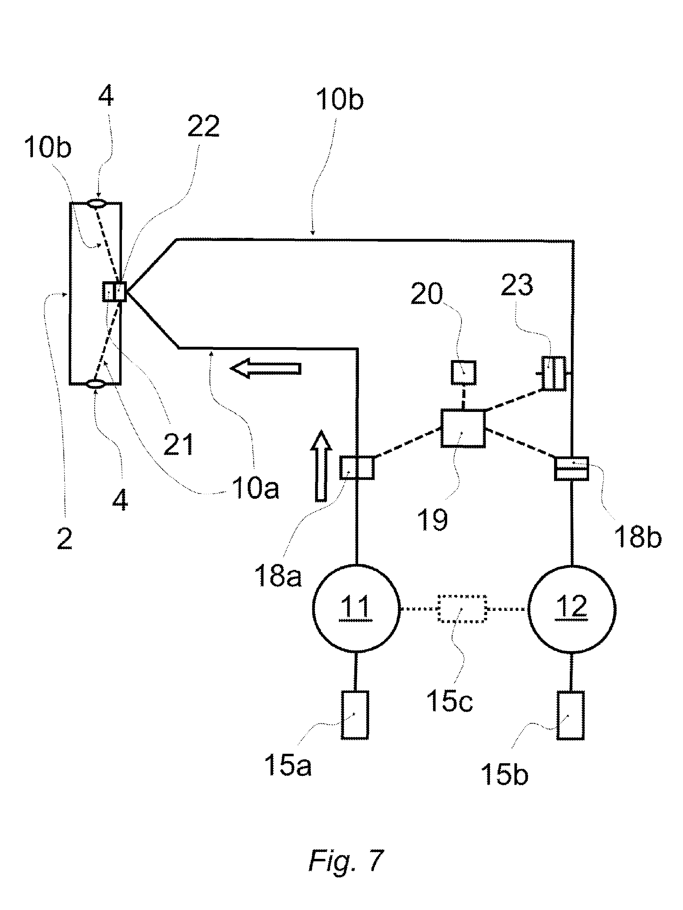

Die Figur 7 zeigt schematisch eine erfindungsgemäße Vorrichtung zur Variation des Reifenrollwiderstands, aufweisend einen erfindungsgemäßen Reifen, insbesondere nach einem Ansprüche 1 bis 6, und einen ersten Fluidspeicher 11 und einen zweiten Fluidspeicher 12, wobei zur Verbindung der radial umlaufenden Druckkammer 4 des Reifens mit den beiden Fluidspeichern 11, 12 Verbindungsleitungen 10a, 10b und Schaltelemente 18a, 18b vorgesehen sind, die eine wechselseitige fluidleitende Verbindung zwischen der Druckkammer 4 und den Fluidspeichern 11, 12 ermöglichen. Die Schaltelemente 18a, und 18b sind als elektrisch betätigbare Stellventile ausgebildet. Der erste Fluidspeicher 11 ist dafür vorgesehen einen höheren Druck des Druckfluids 5 bereitzustellen als der zweite Fluidspeicher 12, wobei der zweite Fluidspeicher 12 insbesondere dafür vorgesehen ist ein Vakuum bereitzustellen. Ein Verfahren zur Variation des Reifenrollwiderstands umfasst einen Reifen, aufweisend eine die Reifenlauffläche des Reifens bildende Belagschicht, wobei die Belagschicht für ein in Kontakt kommen mit einer Bodenoberfläche ausgelegt ist, einen die Belagschicht tragenden Stützkörper, insbesondere einen mit einem Füllfluid befüllbaren Stützkörper, wobei auf der der Bodenoberfläche abgewandten Seite der Belagschicht mindestens eine radial umlaufende Druckkammer vorgesehen ist, wobei von einer Steuer-und/oder Sensoreinheit eines mit dem Reifen versehenen Fahrzeuges in Abhängigkeit zu einem ermittelten Fahrzustandsparameter durch eine Variation des Drucks eines Druckfluids innerhalb der Druckkammer ein Teilbereich dieser Belagschicht in der Umgebung der Druckkammer in alleinige oder außer Wirkung mit der Bodenoberfläche gebracht wird. Als Fahrzustandsparameter werden insbesondere eine im Wesentlichen Geradeausfahrt des Fahrzeugs erfassende Fahrzustandsparameter verstanden. Die Variation des Drucks erfolgt in diesem Ausführungsbeispiel durch das Öffnen des Schaltelements 18a, welches eine fluidleitende Verbindung zwischen der Druckkammer 4 und dem Fluidspeicher 11 herstellt. Das Schaltelement 18b bleibt geschlossen. Das Druckfluid 5 strömt unter einem gegenüber der Atmosphäre bzw. gegenüber dem Druck innerhalb des Stützkörpers (also dem Druck des Füllfluids) erhöhten Druck in die Druckkammer 4 des erfindungsgemäßen Reifens und bewirkt, dass der Teilbereich 1a der Belagschicht 1 in der Umgebung der Druckkammer 4 in alleinige Wirkung mit der Bodenoberfläche gebracht wird. Hierzu wird der Druckwert innerhalb der Druckkammer 4 mittels eines Innendruck-Sensorelements 21 erfasst und an die Steuereinheit 19 übertragen. Die Steuereinheit 19 erhöht den Druck des Druckfluids 5 innerhalb der Druckkammer 4 durch Öffnen des Schaltelements 18a so lange, bis ein vordefinierter Druckwert des Druckfluids erreicht ist, dem eine minimale Aufstandsfläche der Belagschicht 1 entspricht. Die minimale Aufstandfläche ist hierbei erreicht, wenn der Teilbereich 1a in alleiniger Wirkung zur Bodenoberfläche gebracht ist. Die Strömungsrichtung des Druckfluids 5 ist durch Pfeile in der Figur 7 angedeutet. Der erhöhte Druck des Druckfluids 5 innerhalb des ersten Fluidspeichers 11 wird mittels einer als Kompressor fungierenden Pumpe 15a oder 15c bereitgestellt. Die Verbindungsleitungen 10a und 10b werden über dem Fachmann bekannte Drehdurchführungen 22 in den Reifen geführt. Alternativ können die Verbindungsleitungen 10a und 10b über eine einzelne Verbindungsleitung 10 und eine einzelne Drehdurchführung 22 in den Reifen geführt sein, da die Verbindungsleitungen 10a und 10b nur wechselseitig eine fluidleitende Verbindung zwischen der Druckkammer und den Fluidspeichern 11 und 12 herstellen. Die Fluidspeicher 11 und 12 werden dann alternativ mittels separater Zuleitungen und eines T-Stücks oder Y-Verbinders mit der zentralen Verbindungsleitung 10 verbunden. Ein Entlastungsventil 23 ist so ausgebildet, dass das Entlastungsventil 23 sich bei einer Funktionsstörung oder einer Signalstörung oder insbesondere bei einem Ausfall der elektrischen Energieversorgung oder anderweitigen Systemausfällen der Vorrichtung öffnet. In Folge dessen stellt sich innerhalb der Druckkammer 4 des erfindungsgemäßen Reifens automatisch ein Druckniveau ein, welches einer maximalen Aufstandsfläche des Reifens entspricht (vgl. diesbezüglich beispielhaft Fig. 6a). Somit wird in den vorgenannten Störfällen immer eine maximale Haftung des Reifens auf der Bodenoberfläche gewährleistet. Das Entlastungsventil kann alternativ auch direkt an einem erfindungsgemäßen Reifen angeordnet sein. Die Sensoreinheit 20 kann Schwingungssensoren, Lenkwinkelsensoren, Traktionssensoren, Geschwindigkeitssensoren, Beschleunigungssensoren, Querbeschleunigungssensoren, Abstandsmesssensoren, Unfallvorwarnsensoren (Pre-Crash-Sensoren), Radarsensoren, Federungssensoren, Regensensoren, ABS-Sensoren, ASR-Sensoren, ESP-Sensoren, MSR-Sensoren, Kamerasensoren, Neigungssensoren oder Kombinationen der vorgenannten Sensoren aufweisen. Die verwendeten Abkürzungen stehen für: ABS (Antiblockiersystem), ASR (Antriebsschlupfregelung), ESP (elektronisches Stabilitätsprogramm) und MSR (Motorschleppmomentenregelung).

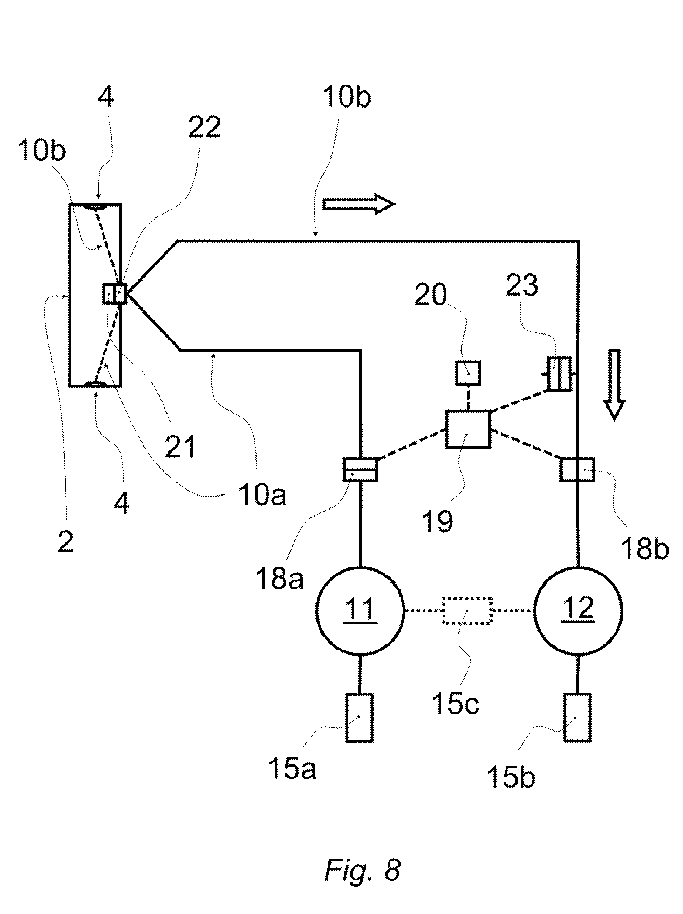

Die Figur 8 zeigt schematisch eine erfindungsgemäße Vorrichtung zur Variation des Reifenrollwiderstands, aufweisend einen erfindungsgemäßen Reifen, insbesondere nach einem Ansprüche 1 bis 6, und einen ersten Fluidspeicher 11 und einen zweiten Fluidspeicher 12, wobei zur Verbindung der radial umlaufenden Druckkammer 4 des Reifens mit den beiden Fluidspeichern 11, 12 Verbindungsleitungen 10a, 10b und Schaltelemente 18a, 18b vorgesehen sind, die eine wechselseitige fluidleitende Verbindung zwischen der Druckkammer 4 und den Fluidspeichern 11, 12 ermöglichen. Der erste Fluidspeicher 11 ist dafür vorgesehen einen höheren Druck des Druckfluids 5 bereitzustellen als der zweite Fluidspeicher 12, wobei der zweite Fluidspeicher 12 insbesondere dafür vorgesehen ist ein Vakuum bereitzustellen. Ein Verfahren zur Variation des Reifenrollwiderstands umfasst einen Reifen, aufweisend eine die Reifenlauffläche des Reifens bildende Belagschicht, wobei die Belagschicht für ein in Kontakt kommen mit einer Bodenoberfläche ausgelegt ist, einen die Belagschicht tragenden Stützkörper, insbesondere einen mit einem Füllfluid befüllbaren Stützkörper, wobei auf der der Bodenoberfläche abgewandten Seite der Belagschicht mindestens eine radial umlaufende Druckkammer vorgesehen ist, wobei von einer Steuer-und/oder Sensoreinheit eines mit dem Reifen versehenen Fahrzeuges in Abhängigkeit zu einem ermittelten Fahrzustandsparameter durch eine Variation des Drucks eines Druckfluids innerhalb der Druckkammer ein Teilbereich dieser Belagschicht in der Umgebung der Druckkammer und die daran angrenzenden Abschnitte der Belagschicht in gemeinsame Wirkung mit der Bodenoberfläche gebracht werden. Als Fahrzustandsparameter werden insbesondere eine enge Kurvenfahrt und/oder eine Bremsung des Fahrzeuges und/oder ein Systemausfall und/oder eine verstärkte Dämpferaktivität und/oder jedwede eine Gefahrensituation erfassende Fahrzustandsparameter verstanden. Die Variation des Drucks erfolgt in diesem Ausführungsbeispiel durch das Öffnen des Schaltelements 18b, welches eine fluidleitende Verbindung zwischen der Druckkammer 4 und dem Fluidspeicher 12 herstellt. Das Schaltelement 18a bleibt geschlossen. Das Druckfluid 5 strömt aufgrund eines gegenüber dem Druck innerhalb der Druckkammer 4 geringeren Drucks in dem Fluidspeicher 12 von der Druckkammer 4 des erfindungsgemäßen Reifens in den Fluidspeicher 12 und bewirkt, dass der Teilbereich 1a der Belagschicht 1 in der Umgebung der Druckkammer 4 mit den angrenzenden Abschnitten 1 b der Belagschicht 1 in gemeinsame Wirkung mit der Bodenoberfläche gebracht wird. Hierzu wird der Druckwert innerhalb der Druckkammer 4 mittels eines Innendruck-Sensorelements 21 erfasst und an die Steuereinheit 19 übertragen. Die Steuereinheit 19 reduziert den Druck des Druckfluids 5 innerhalb der Druckkammer 4 durch Öffnen des Schaltelements 18a so lange, bis ein vordefinierter Druckwert erreicht ist, dem eine maximale Aufstandsfläche der Belagschicht 1 entspricht. Die Strömungsrichtung des Druckfluids 5 ist durch Pfeile in der Figur 8 angedeutet. Der geringere Druck des Druckfluids 5 bzw. das Vakuum innerhalb des zweiten Fluidspeichers 12 wird mittels einer als Saugpumpe fungierenden Pumpe 15b oder 15c bereitgestellt. Alternativ besteht die Möglichkeit den Druck, zumindest teilweise über ein Entlastungsventil 23 direkt an die Atmosphäre abzulassen. Das Entlastungsventil 23 ist dabei so ausgebildet, dass das Entlastungsventil 23 sich bei einer Funktionsstörung oder einer Signalstörung oder insbesondere bei einem Ausfall der elektrischen Energieversorgung oder anderweitigen Systemausfällen der Vorrichtung öffnen kann. In Folge dessen stellt sich innerhalb der Druckkammer 4 des erfindungsgemäßen Reifens automatisch ein Druckwert ein, welcher einer maximalen Aufstandsfläche des Reifens entspricht (vgl. diesbezüglich beispielhaft Fig. 6a). Somit wird in den vorgenannten Störfällen immer eine maximale Haftung des Reifens auf der Bodenoberfläche gewährleistet, selbst wenn Teile der Vorrichtung gestört oder defekt sind. Das Entlastungsventil kann alternativ auch direkt an einem erfindungsgemäßen Reifen angeordnet sein. Die Sensoreinheit 20 kann Schwingungssensoren, Lenkwinkelsensoren, Traktionssensoren, Geschwindigkeitssensoren, Beschleunigungssensoren, Querbeschleunigungssensoren, Abstandsmesssensoren, Unfallvorwarnsensoren (Pre-Crash-Sensoren), Radarsensoren, Federungssensoren, Regensensoren, ABS-Sensoren, ASR-Sensoren, ESP-Sensoren, MSR-Sensoren, Kamerasensoren, Neigungssensoren oder Kombinationen der vorgenannten Sensoren aufweisen. Die verwendeten Abkürzungen stehen für: ABS (Antiblockiersystem), ASR (Antriebsschlupfregelung), ESP (elektronisches Stabilitätsprogramm) und MSR (Motorschleppmomentenregelung).

## Patentansprüche

1. Reifen mit variablem Rollwiderstand für ein Fahrzeug, aufweisend
- eine die Reifenlauffläche des Reifens bildende Belagschicht (1), wobei die Belagschicht (1) für ein in Kontakt kommen mit einer Bodenoberfläche ausgelegt ist,
- einen die Belagschicht (1) tragenden Stützkörper (2), insbesondere einen mit einem Füllfluid (3) befüllbaren Stützkörper (2),
**dadurch gekennzeichnet, dass** auf der der Bodenoberfläche abgewandten Seite der Belagschicht (1) mindestens eine radial umlaufende Druckkammer (4) vorgesehen ist, so dass bei einer Variation des Drucks eines Druckfluids (5) innerhalb der Druckkammer (4) mindestens ein Teilbereich (1a) der Belagschicht (1) in der Umgebung der Druckkammer (4) in alleinige oder außer Wirkung mit der Bodenoberfläche bringbar ist.

2. Reifen nach Anspruch 1, **dadurch gekennzeichnet, dass** die Druckkammer (4) innerhalb einer Wandung (7) des Stützkörpers (2) ausgebildet ist.

3. Reifen nach Anspruch 2, **dadurch gekennzeichnet, dass** sich das Elastizitätsverhalten der Wandung im Bereich (7a) der Druckkammer (4) von dem Elastizitätsverhalten der Wandung in den übrigen Bereichen (7b) unterscheidet, insbesondere größer ist.

4. Reifen nach Anspruch 1, **dadurch gekennzeichnet, dass** die Druckkammer (4) innerhalb eines separaten Druckschlauchs (8) ausgebildet ist, wobei der Teilbereich (1a) der Belagschicht (1) durch einen Teil oder ein Segment der Wandung (9) des Druckschlauches (8) gebildet ist.

5. Reifen nach einem der vorstehenden Ansprüche, **dadurch gekennzeichnet, dass** der Teilbereich (1a) der Belagschicht (1) aus einem Material gebildet ist, das im Vergleich zu dem Material der angrenzenden Abschnitte (1b) der Belagschicht (1) geringere Hystereseverluste und/oder einen geringeren Verlustfaktor tan δ bei einer Temperatur im Temperaturbereich von 20 °C bis 90 °C aufweist.

6. Reifen nach einem der vorstehenden Ansprüche, **dadurch gekennzeichnet, dass** mindestens eine Verbindungsleitung (10, 10a, 10b) zur Verbindung der Druckkammer (4) mit mindestens einem Fluidspeicher (11, 12) und/oder einer Fluidquelle (15) vorgesehen ist.

7. Vorrichtung zur Variation des Reifenrollwiderstands, aufweisend einen Reifen nach einem der vorstehenden Ansprüche, einen ersten Fluidspeicher (11) und einen zweiten Fluidspeicher (12), wobei zur Verbindung der Druckkammer (4) mit den beiden Fluidspeichern (11, 12) mindestens eine Verbindungsleitung (10, 10a, 10b) und Schaltelemente (18a, 18b) vorgesehen sind, die vorzugsweise eine wechselseitige fluidleitende Verbindung zwischen der Druckkammer (4) und den Fluidspeichern (11, 12) ermöglichen.

8. Vorrichtung zur Variation des Reifenrollwiderstands nach Anspruch 7, **dadurch gekennzeichnet, dass** der erste Fluidspeicher (11) dafür vorgesehen ist einen höheren Druck eines Druckfluids (5) bereitzustellen als der zweite Fluidspeicher (12), wobei der zweite Fluidspeicher (12) insbesondere dafür vorgesehen ist ein Vakuum bereitzustellen.

9. Verfahren zur Variation des Reifenrollwiderstands, mit einem Reifen, aufweisend eine die Reifenlauffläche des Reifens bildende Belagschicht (1), wobei die Belagschicht (1) für ein in Kontakt kommen mit einer Bodenoberfläche ausgelegt ist, einen die Belagschicht (1) tragenden Stützkörper (2), insbesondere einen mit einem Füllfluid (3) befüllbaren Stützkörper (2), wobei auf der der Bodenoberfläche abgewandten Seite der Belagschicht (1) mindestens eine radial umlaufende Druckkammer (4) vorgesehen ist, wobei von einer Steuer- und/oder Sensoreinheit (19, 20) eines mit dem Reifen versehenen Fahrzeuges in Abhängigkeit zu einem ermittelten Fahrzustandsparameter durch eine Variation des Drucks eines Druckfluids (5) innerhalb der Druckkammer (4) ein Teilbereich (1a) dieser Belagschicht (1) in der Umgebung der Druckkammer (4) in alleinige oder außer Wirkung mit der Bodenoberfläche gebracht wird.

10. Verfahren zur Variation des Reifenrollwiderstands, mit einem Reifen, aufweisend eine die Reifenlauffläche des Reifens bildende Belagschicht (1), wobei die Belagschicht (1) für ein in Kontakt kommen mit einer Bodenoberfläche ausgelegt ist, einen die Belagschicht (1) tragenden Stützkörper (2), insbesondere einen mit einem Füllfluid (3) befüllbaren Stützkörper (2), wobei auf der der Bodenoberfläche abgewandten Seite der Belagschicht (1) mindestens eine radial umlaufende Druckkammer (4) vorgesehen ist, wobei von einer Steuer- und/oder Sensoreinheit (19, 20) eines mit dem Reifen versehenen Fahrzeuges in Abhängigkeit zu einem ermittelten Fahrzustandsparameter durch eine Variation des Drucks eines Druckfluids (5) innerhalb der Druckkammer (4) ein Teilbereich (1a) dieser Belagschicht (1) in der Umgebung der Druckkammer (4) und die daran angrenzenden Abschnitte (1 b) der Belagschicht (1) in gemeinsame Wirkung mit der Bodenoberfläche gebracht werden.
